# EUROPEAN PATENT SPECIFICATION

(11) **EP 3 769 649 B1**
(45) Date of publication and mention of the grant of the patent: **17.11.2021**
(21) Application number: 20187631.5
(22) Date of filing: 24.07.2020
(51) Int. Cl.: A47J 31/46, A47J 31/56

(54) **HEAT EXCHANGER FOR DISCHARGE CONTAINERS OF SOLENOID VALVES OF MACHINES FOR COFFEE DISPENSING, RELATIVE DISCHARGE CONTAINER EQUIPPED WITH SUCH HEAT EXCHANGER AND MACHINE FOR COFFEE DISPENSING PROVIDED WITH SUCH DISCHARGE CONTAINER AND SUCH HEAT EXCHANGER**
WÄRMETAUSCHER ZUM ENTLEEREN VON BEHÄLTERN VON MAGNETVENTILEN VON MASCHINEN ZUR AUSGABE VON KAFFEE, BEHÄLTER MIT EINEM SOLCHEN WÄRMETAUSCHER UND MASCHINE ZUR AUSGABE VON KAFFEE MIT EINEM SOLCHEN WÄRMETAUSCHER
ÉCHANGEUR DE CHALEUR POUR RÉCIPIENTS DE DÉCHARGE D'ÉLECTROVANNES DE MACHINES DE DISTRIBUTION DE CAFÉ, RÉCIPIENT DE DÉCHARGE RELATIVE ÉQUIPÉ D'UN TEL ÉCHANGEUR DE CHALEUR ET MACHINE DE DISTRIBUTION DE CAFÉ POURVUE D'UN TEL RÉCIPIENT DE DÉCHARGE ET UN TEL ÉCHANGEUR DE CHALEUR

(30) Priority: 25.07.2019 IT 201900012945
(43) Date of publication of application: 27.01.2021
(73) Proprietor: SIMONELLI GROUP S.P.A., 62020 Belforte del Chienti (MC) (IT)
(72) Inventor: CINGOLANI, Claudio, 62032 Camerino (MC) (IT); RINALDESI, Mario, 62014 Corridonia (MC) (IT); COGNIGNI, Luca, 62100 MACERATA (IT)
(74) Representative: Branca, Emanuela

(56) References cited:
- EP-A1- 0 540 440
- WO-A1-94/00045
- WO-A1-2017/068524

## Description

The present invention relates to a heat exchanger, in particular with indirect contact, preferably on the surface, for discharge containers of solenoid valves of machines for coffee dispensing, in accordance with the present invention.

The object of the present invention also relates to a discharge container for solenoid valves of machines for coffee dispensing equipped with the aforesaid heat exchanger.

The object of the present invention is also a machine for coffee dispensing equipped with a discharge container for solenoid valves of machines for coffee dispensing provided with the aforesaid heat exchanger. The object of the present invention refers to the technical industrial sector of machines for coffee dispensing in general and, in particular, it is aimed at professional machines for coffee dispensing.

As is known, the technical sector of machines for coffee dispensing is becoming more and more aligned with the general needs of reducing energy consumption and increasing the general performance of the machines that are produced and marketed.

The growing efforts by the manufacturers of machines for coffee dispensing has gradually allowed to obtain a greater reduction of heat losses to the outside, optimize the powers and spaces of the internal components of the same, as well as achieve significant results in terms of energy saving and overall dimensions.

Despite the various efforts to limit waste of heat to the maximum, the Applicant has found that there are still significant margins for improvement especially in relation to the discharges of the solenoid valves that manage the hot water flows destined for the extraction of coffee.

WO 2017/068524 is the prior art closest to the invention and discloses a heat exchanger for discharge containers of solenoid valves of machines for coffee dispensing, the heat exchanger comprising a body, the body comprising:a first portion ;a second portion;the first and second portion of the body of the heat exchanger allowing an exchange of heat by conduction.

With particular reference to the extraction of coffee in current machines for the preparation and for dispensing the relative hot beverage, said operation is carried out by controlling corresponding flows of water heated to 90°C which pass through respective three-way solenoid valves arranged at respective dispensing groups.

The actuation of each solenoid valve causes the transit of hot water through the corresponding dispensing group and the relative extraction of the coffee.

Once the coffee has been extracted, the excess hot water that is between the coffee panel and the shower head of the dispensing group is expelled into the discharge in order to lower the pressure in the area of the filter holder and thus allow the operator to remove the filter holder quickly and easily.

The hot water that is discharged by each solenoid valve first flows directly into a respective discharge container and, subsequently, into the discharge of the machine for coffee dispensing resulting in a significant waste of heated water potentially reusable for the purpose of the recovery of thermal energy.

The main object of the present invention is to propose a heat exchanger, in particular with indirect contact, preferably on the surface, for discharge containers of solenoid valves of machines for coffee dispensing, a relative discharge container equipped with such heat exchanger and a machine for coffee dispensing equipped with such discharge container and the relative heat exchanger, capable of solving the problems encountered in the prior art.

It is also an object of the present invention to further reduce the heat losses of the machines for coffee dispensing.

It is also an object of the present invention to increase the performance of the machines for coffee dispensing. A further object of the present invention is to optimize the powers of the internal components of the machines for coffee dispensing.

Finally, an object of the present invention is to reduce the overall energy consumption of the machines for coffee dispensing required to heat the supply water coming from the water network or from a similar supply source.

The purposes specified above and others are substantially achieved by a heat exchanger, in particular with indirect contact, preferably on the surface, for discharge containers of solenoid valves of machines for coffee dispensing, a relative discharge container provided with such heat exchanger and a machine for coffee dispensing provided with such discharge container and the relative heat exchanger, as described and claimed below.

By way of example, the description of a preferred but not exclusive embodiment of a heat exchanger, in particular with indirect contact, preferably on the surface, for discharge containers of solenoid valves of machines for coffee dispensing, a relative discharge container provided with such heat exchanger and a machine for coffee dispensing provided with such discharge container and the relative heat exchanger, is reported in accordance with the present invention.

Such description will be made herein below with reference to the accompanying drawings, provided for indicative only and therefore not limiting purpose, in which:
figure 1 is a perspective view from above of a heat exchanger, in particular with indirect contact, preferably on the surface, for discharge containers of solenoid valves of machines for coffee dispensing, in accordance with the present invention;
figure 2 is a top view of the heat exchanger of figure 1;
figure 3 is a bottom view of the heat exchanger as per figures 1 and 2;
figure 4 is a side elevation view of the heat exchanger as per figures 1 to 3;
figure 5 is a section of the heat exchanger as per figures from 1 to 4, taken along the trace V-V of figure 4;
figure 6 is a perspective view from above of a discharge container for solenoid valves of machines for coffee dispensing equipped with the aforesaid heat exchanger, in accordance with the present invention;
figure 7 is a top view of the discharge container of figure 6;
figure 8 is a section of the discharge container as per figures 6 and 7, taken according to the trace VIII-VIII of figure 7;
figure 9 is a hydraulic diagram of a machines for coffee dispensing provided with the discharge container as per figures 6 to 8 and with the heat exchanger as per

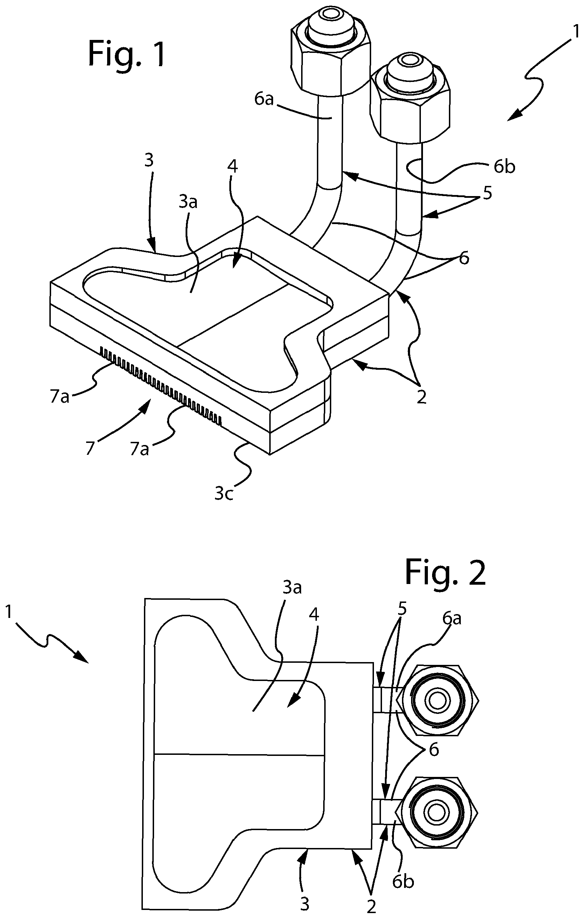

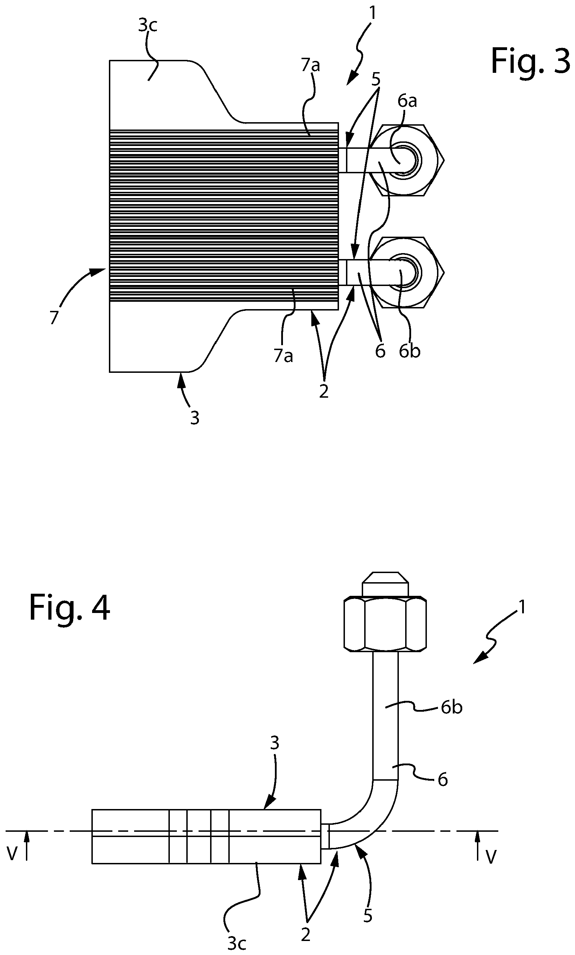

figures 1 to 8, in accordance with the present invention. With reference to the accompanying figures, the number 1 indicates overall a heat exchanger, in particular with indirect contact, preferably on the surface, for discharge containers 300 of solenoid valves 200 of machines 100 for dispensing coffee.

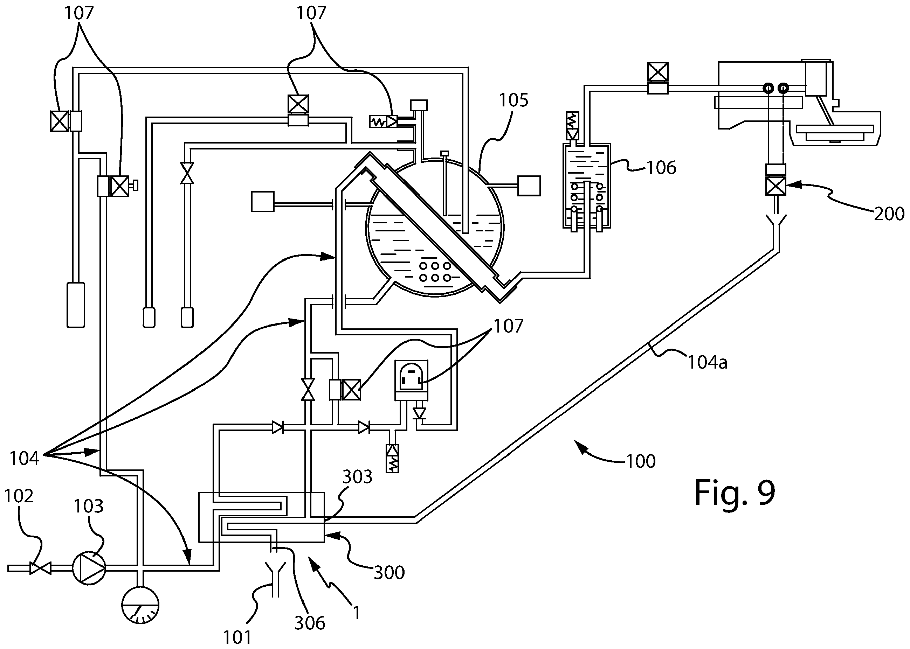

As can be seen in figures 1 to 8, the heat exchanger 1 comprises a body 2 which can be placed inside a discharge container 300 of at least one solenoid valve 200 of a machine 100 for coffee dispensing (schematically represented in figure 9).

The body 2 comprises a first portion 3 externally presenting a collection cavity 4 of a hot waste fluid F1 coming from at least one solenoid valve 200 of the machine 100 for coffee dispensing.

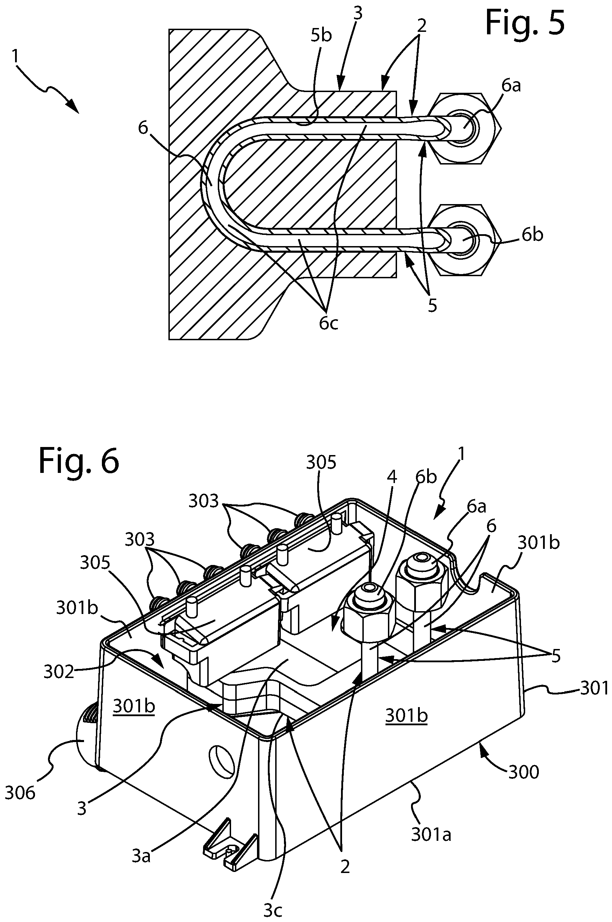

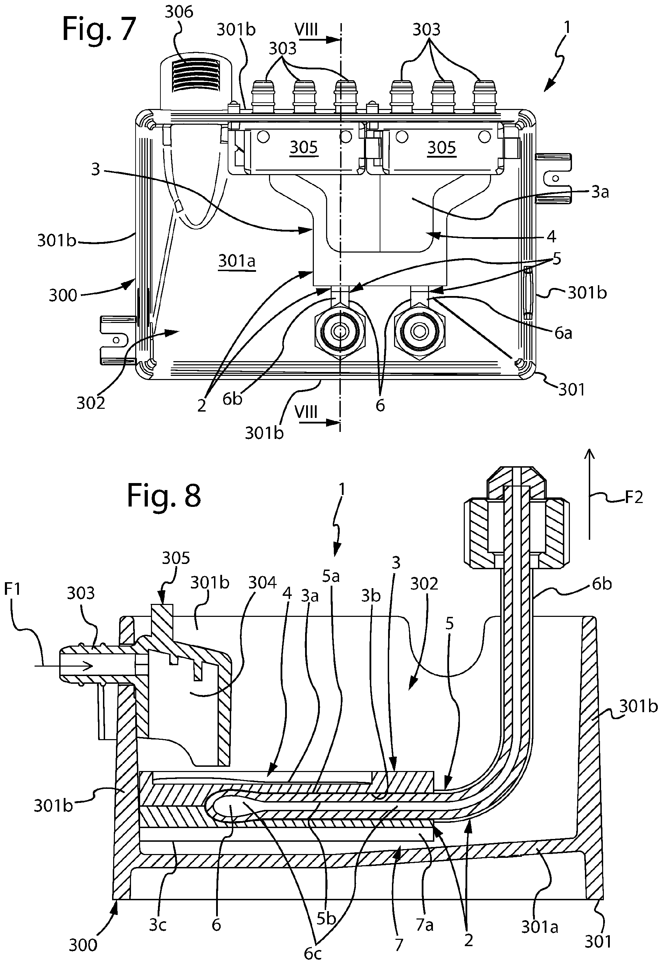

In detail, the collection cavity 4 defines a first surface 3a of the first portion 3, arranged to come into contact with the hot waste fluid F1 (Figure 8) coming from at least one solenoid valve 200 of the machine 100 for coffee dispensing and a second surface 3b (figure 8) arranged on the opposite side of the first surface 3a. The heat exchanger 1 further comprises a second portion 5 (figures 1 to 8) presenting a primary surface 5a (figure 8) in contact, preferably direct, with the second surface 3b of the first portion 3 of the body 2 and a secondary surface 5b (figures 5 and 8) facing the opposite side from the first surface 5a.

The secondary surface 5b of the second portion 5 of the body 2 is arranged to come into contact with a heat exchange fluid F2 of the machine 100 for coffee dispensing having a temperature different from the temperature of the hot discharge fluid F1 of the solenoid valve 200.

By means of the surfaces 3a, 3b, 5a, 5b respectively of the first portion 3 and of the second portion 5 of the body 2 of the heat exchanger 1, the first and the second portion 3, 5 of the body 2 allow and ensure an exchange of heat, by conduction, between the hot discharge fluid F1, coming from at least one solenoid valve 200 of the machine 100, in contact with the first surface 3a of the first portion 3 of the body 2 and the heat exchange fluid F2 of the machine 100 in contact with the secondary surface 5b of the second portion 5 of the body 2. Going more and more into detail, as can be seen in figures 1 to 8, the second portion 5 of the body 2 of the heat exchanger 1 comprises a transit duct 6 of the heat exchange fluid F2 of the machine 100 for coffee dispensing.

The transit conduit 6 has at least one supply fitting 6a of the heat exchange fluid F2 coming from the machine 100 for coffee dispensing which develops outside the first portion 5 of the body 2 of the heat exchanger 1. Advantageously, the supply fitting 6a of the transit conduit 6 can be connected to a water supply duct coming from the water network or from a similar source of water supply.

The transit conduit 6 also has at least one outlet fitting 6b of the heat exchange fluid F2 which must reach the machine 100 for coffee dispensing. Similarly to the supply fitting 6a of the duct 6, the outlet fitting 6b also develops outside the first portion 5 of the body 2 of the heat exchanger 1, preferably substantially parallel to the supply fitting 6a.

The supply fitting 6a and the outlet fitting 6b of the transit duct 6 of the heat exchange fluid F2 of the machine 100 for coffee dispensing each develops transversely, preferably perpendicularly, to a prevailing development plane of the first portion 5 of the body 2 of the heat exchanger 1.

With reference to figures 5 and 8, the transit duct 6 also has at least one transit segment 6c developing inside the first portion 5 of the body 2 of the heat exchanger 1, preferably in correspondence of the first surface 3a of the latter. The transit segment 6c of the transit duct 6 is in fluid communication with the supply fitting 6a and outlet fitting 6b of the heat exchange fluid F2 of the machine 100 for coffee dispensing.

As can be seen in Figure 5, the transit segment 6c of the transit duct 6 defining the second portion 5 of the body 2 of the heat exchanger 1 develops inside the first portion 5 of the body 2 of the latter according to a substantially C-shaped path.

With reference to figure 8, the primary surface 5a of the second portion 5 of the body 2 of the heat exchanger 1 is defined by the outer surface of the transit duct 6 of the heat exchange fluid F2 at least in correspondence of the transit segment 6c of the latter.

The secondary surface 5b of the second portion 5 of the body 2 of the heat exchanger 1 is defined by the internal surface of the transit duct 6 of the heat exchange fluid F2 at least in correspondence of the transit segment 6c. Still with reference to figures 5 and 8, the second surface 3b of the first portion 3 of the body 2 of the heat exchanger 1 is defined by the surface of the first portion 5 in direct contact with the outer surface of the transit duct 6 of the heat exchange fluid F2 of the machine 100 for coffee dispensing at least in correspondence of the transit segment 6c. Advantageously, the second surface 3b of the first portion 3 of the body 2 of the heat exchanger 1 is at least in part, preferably completely, counter-shaped to the primary surface 5a of the second portion 5, i.e. to the outer surface of the transit segment 6c of the transit duct 6.

As can be seen in figures 1, 3 and 8, the first portion 5 of the body 2 of the heat exchanger 1 present at least one auxiliary heat exchange area 7 provided with a plurality of fins 7a which favour the heat exchange between the first portion 3 itself and the fluid present inside the discharge container 300 of the solenoid valve 200 of the machine 100 for coffee dispensing.

Still with reference to figures 1, 3 and 8, the auxiliary exchange area 7 is arranged on a third surface 3c of the first portion 3 of the body 2 of the heat exchanger 1 facing the opposite side with respect to the first surface 3a and outwards.

As can be seen in figure 8, the second portion 5 of the body 2 of the heat exchanger 1 and the second surface 3b of the first portion 3 of the same body 2 are interposed between the first surface 3a and the third surface 3c of the latter.

In order to allow an easy and smooth insertion of the heat exchanger 1 into the discharge container 300 of the solenoid valve 200 of the machine 100 for coffee dispensing, the first portion 3 of the body 2 of the heat exchanger 1 presents a substantially flattened external and/or overall conformation (figures 1, 4, 6 and 8) .

The first portion 3 of the body 2 of the heat exchanger 1 also presents a substantially trapezoidal shape.

Preferably, the shape of the first portion 3 of the body 2 of the heat exchanger 1 narrows as it approaches the supply 6a and outlet 6b fittings of the transit duct 6. Furthermore, the subject matter of the present invention is also a discharge container 300 (figures 6 to 9) for at least one solenoid valve 200 of a machine 100 for coffee dispensing.

As can be seen in figures 6 to 8, the discharge container 300 comprises a structure 301 having a substantially rectangular bottom 301a, from which four side walls 301b develop substantially perpendicularly, opposed two by two.

The bottom 301a and the side walls 301b together define a housing compartment 302 for collecting a hot waste fluid F1 coming from at least one solenoid valve 200 of the machine 100 for coffee dispensing.

Still with reference to figures 6 to 8, the discharge container 300 is provided with at least one inlet 303 for the transit of the relative hot waste fluid F1 coming from at least one respective solenoid valve 200 of the machine 100 for coffee dispensing.

In accordance with the embodiment illustrated in figures 6 to 8, the discharge container 300 is provided with a series of inlets 303 which convey, for example in groups of three, the hot waste fluid F1 at the inlet into the respective deflection chambers 304 made of corresponding inlet blocks 305 which engage at least one of the side walls 301b of the structure 301 of the discharge container 300.

As can be seen in Figure 8, each deflection chamber 304 is configured in such a way as to convey the flow of the hot waste fluid F1 coming from at least one solenoid valve 200 of the machine 100 for coffee dispensing towards the bottom 301a of the structure 301 of the discharge container 300.

The discharge container 300 also includes at least one outflow outlet 306 to allow the outflow of the hot waste fluid F1 accumulated inside the housing compartment 302 towards the final discharge 101 of the machine 100.

As can be seen in figures 6 and 8, the heat exchanger 1 is positioned inside the housing compartment 302 of the discharge container 300 so as to present the collection cavity 4 of the hot waste fluid F1 coming from the respective solenoid valves 200 of the machine 100 for coffee dispensing and, consequently, the first surface 3a of the first portion 3 of the relative body 2 arranged below the inlets 303 of said waste fluid F1.

In other words, the body 2 of the heat exchanger 1 is interposed between the inlets 303 of the hot waste fluid F1 coming from the solenoid valves 200 of the machine 100 for coffee dispensing and the outflow outlet 306 of the discharge container 300.

In this way, at the end of each coffee extraction operation, the excess hot waste fluid F1 is sent to the discharge container 300 entering the housing compartment 302 of the latter through the respective inlet 303 and the corresponding deflection chamber 304. Each deflection chamber 304 directs the respective flow of fluid F1 at the inlet towards the collection cavity 4 of the heat exchanger 1 by heating the first portion 3 of the latter and, consequently, the transit segment 6c of the duct 6 of the second portion 5. The passage of the heat exchange fluid F2 along the transit segment 6c of the transit duct 6, which is indirectly heated by the hot waste fluid F1 through the first portion 3 of the body 2 of the heat exchanger 1, consequently heats the heat exchange fluid F2 which is sent to the machine 100 through the outlet fitting 6b in order to be reused by it.

As can be seen in the schematic representation of Figure 9, the machine 100 for coffee dispensing is a machine of a known type which comprises:
- a general supply valve 102 connectable to a water network or a similar water supply source arranged in series with a feed pump 103;
- a hydraulic circuit 104 developing from the general supply valve 102 affecting all the components of the machine 100 for dispensing coffee;
- at least one indirect heating boiler 105 of the water and at least one direct heating boiler 106 of the water operatively arranged between the general valve 102 and the solenoid valves 200 destined for coffee dispensing to heat the water supply up to the temperature suitable for the coffee extraction;
- a series of valves and/or components 107 necessary for the correct operation of the machine 100 for coffee dispensing.

Advantageously, as can be seen in the diagram of figure 9, the discharge container 300, provided with the aforesaid heat exchanger 1, is in fluid communication with at least one of the solenoid valves 200 of the machine 100 through a respective collection duct 104a of the hydraulic circuit 104. The excess water at the end of the extraction of the coffee corresponding to the hot waste fluid F1 is conveyed through the collection duct 104a towards the respective inlet 303 of the discharge container 300 so as to flood the body 2 of the heat exchanger 1 arranged in it, consequently heating both the first portion 3 and the transit duct 6 of the second portion 5.

Still with reference to figure 9, the supply water coming from the general supply valve 102, corresponding to the heat exchange fluid F2, is conveyed directly to the supply fitting 6a of the transit duct 6 of the second portion 5 of the body 2 of the heat exchanger 1 so as to travel through the transit segment 6c and be heated by the effect of the heat exchange between the waste fluid F1 and the portions 3, 5 of the body 2 of the heat exchanger 1.

The heated water at the outlet from the heat exchanger 1 through the respective outlet fitting 6b can be sent to one of the boilers 105, 106 according to the needs, so as to feed them with already preheated water and thus reducing the energy overall required to maintain the operating temperatures of the relative machine 100. Similarly, also the hot waste water accumulated in the housing compartment 302 of the discharge container 300 can be sent to one of the boilers 105, 106 or discharged through the final discharge 101 of the machine 100 for coffee dispensing.

The heat exchanger 1, the discharge container 300 provided with said heat exchanger 1, as well as the machine 100 for coffee dispensing provided with such discharge container 300 and the relative heat exchanger 1 described above solve the problems encountered in the prior art and achieve important advantages.

First of all, the preheating actuated by the heat exchanger on the supply water coming from the water network or from a similar source allows a significant reduction of the overall heat losses of the machines, as it permits exploiting the heat of the excess water from the coffee extractions.

Naturally, the preheating of the supply water allows an increase in the performance of the machines which must use less time and energy to reach operating temperatures. It should also be considered that the powers of the internal components of the machines on which the heat exchangers are installed according to the present invention are thus optimized.

Finally, it should be highlighted that the preheating of the water supplied by heat exchangers such as the one described above allows a significant reduction in the energy consumption of the machines for coffee dispensing.

## Claims

1. Heat exchanger (1), in particular with indirect contact, preferably on the surface, for discharge containers (300) of solenoid valves (200) of machines (100) for coffee dispensing, the heat exchanger (1) comprising a body (2) configured to be placed inside a discharge container (300) of at least one solenoid valve (200) of a machine (100) for coffee dispensing, the body (2) comprising:
a first portion (3) externally presenting a collection cavity (4) of a hot waste fluid (F1) coming from the solenoid valve (200) of the machine (100) for coffee dispensing, the collection cavity (4) defining a first surface (3a) of the first portion (3), arranged to come into contact with the hot waste fluid (F1) of the solenoid valve (200) and a second surface (3b) facing the opposite side from the first surface (3a);
a second portion (5) presenting a primary surface (5a) in contact with the second surface (3b) of the first portion (3) and a secondary surface (5b) opposed to the primary surface (5a), the secondary surface (5b) of the second portion (5) of the body (2) being arranged to come into contact with a heat exchange fluid (F2) of the machine (100) for coffee dispensing having a different temperature from the temperature of the hot waste fluid (F1) of the solenoid valve (200) of the machine (100), the first and second portion (3, 5) of the body (2) of the heat exchanger (1) allowing an exchange of heat, by conduction, between the hot waste fluid (F1) of the solenoid valve (200) in contact with the first surface (3a) of the first portion (3) of the body (2) and the heat exchange fluid (F2) of the machine (100) for coffee dispensing in contact with the secondary surface (5b) of the second portion (5) of the body (2) of the heat exchanger (1).

2. Heat exchanger (1) according to claim 1, wherein the second portion (5) of the body (2) of the heat exchanger (1) comprises a transit duct (6) of the heat exchange fluid (F2) of the machine (100) for coffee dispensing, the transit duct (6) presenting:
a supply fitting (6a) of the heat exchange fluid (F2) coming from the machine (100) for coffee dispensing which develops outside the first portion (3) of the body (2) of the heat exchanger (1);
an outlet fitting (6b) of the heat exchange fluid (F2) directed towards the machine (100) for coffee dispensing which develops outside the first portion (3) of the body (2) of the heat exchanger (1), preferably substantially parallel to the supply fitting (6a);
at least one transit segment (6c) developing inside the first portion (5) of the body (2) of the heat exchanger (1), preferably in correspondence of the first surface (3a) of the latter, the transit segment (6c) being in fluid communication with the supply fitting (6a) and the outlet fitting (6b).

3. Heat exchanger (1) according to claim 2, wherein:
the primary surface (5a) of the second portion (5) of the body (2) of the heat exchanger (1) is defined by the outer surface of the transit duct (6) of the heat exchange fluid (F2) at least in correspondence of the transit segment (6c);
the secondary surface (5b) of the second portion (5) of the body (2) of the heat exchanger (1) is defined by the internal surface of the transit duct (6) of the heat exchange fluid (F2) at least in correspondence of the transit segment (6c);
the second surface (3b) of the first portion (3) of the body (2) of the heat exchanger (1) is defined by the surface of the first portion (3) in direct contact with the outer surface of the transit duct (6) of the heat exchange fluid (F2) at least in correspondence of the transit segment (6c).

4. Heat exchanger (1) according to claim 2 or 3, wherein the transit segment (6c) of the transit duct (6) defining the second portion (5) of the body (2) of the heat exchanger (1) develops inside of the first portion (3) of the body (2) of the latter according to a substantially C-shaped path.

5. Heat exchanger (1) according to any one of claims 2 to 4, wherein the first portion (3) of the body (2) of the heat exchanger (1) presents at least one auxiliary heat exchange area (7) provided with a plurality of fins (7a) for heat exchange.

6. Heat exchanger (1) according to claim 4 or 5, wherein the auxiliary exchange area (7) is arranged on a third surface (3c) of the first portion (3) of the body (2) of the heat exchanger (1) facing the opposite side with respect to the first surface (3a) and outwards, the second portion (5) of the body (2) of the heat exchanger (1) and the second surface (3b) of the first portion (3) of the same body (2) being interposed between the first (3a) and the third surface (3c) of the first portion (3) .

7. Heat exchanger (1) according to any one of claims 2 to 6, wherein the first portion (3) of the body (2) of the heat exchanger (1) presents a substantially flattened external and / or overall conformation.

8. Heat exchanger (1) according to any one of claims 2 to 7, wherein the first portion (3) of the body (2) of the heat exchanger (1) presents a substantially trapezoidal shape, preferably narrowing as it approaches the supply (6a) and outlet (6b) fittings of the transit duct (6).

9. Heat exchanger (1) according to any one of claims 2 to 8, wherein the supply fitting (6a) and the outlet fitting (6b) of the transit duct (6) of the heat exchange fluid (F2) of the machine (100) for coffee dispensing each develops transversely, preferably perpendicularly to a prevailing development plane of the first portion (3) of the body (2) of the heat exchanger (1).

10. Heat exchanger (1) according to any one of the preceding claims, wherein the first portion (3) of the body (2) of the heat exchanger (1) presents an overall size of less than the dimensions of a housing compartment (302) of the discharge container (300) of the solenoid valve (200) of the machine (100) for coffee dispensing.

11. Discharge container (300) for solenoid valves (200) of machines (100) for coffee dispensing, the discharge container (300) comprising:
a structure (301) defining at least one housing compartment (302) for collecting a hot waste fluid (F1) coming from at least one solenoid valve (200) of a machine (100) for coffee dispensing;
at least one inlet (303) connectable to a solenoid valve (200) of a machine (100) for coffee dispensing to allow the passage of the relative hot waste fluid (F1) towards the housing compartment (302) of the structure (301) ;
at least one outlet (306) to allow the outflow of the hot waste fluid (F1) accumulated inside the housing compartment (302) of the discharge container (300);
**characterized in that** it comprises at least one heat exchanger (1) according to any one of the preceding claims.

12. Discharge container (300) according to claim 11, wherein the heat exchanger (1) has the collection cavity (4) of the hot waste fluid (F1) coming from the respective solenoid valve (200) of the machine (100) for coffee dispensing and, consequently, the first surface (3a) of the first portion (3) of the relative body (2) arranged below the inlet (303) of the hot waste fluid (F1) .

13. Discharge container (300) according to claim 12, wherein the body (2) of the heat exchanger (1) is interposed between the inlet (303) of the hot waste fluid (F1) of the solenoid valve (200) of the machine (100) for coffee dispensing and outflow outlet (306).

14. Machine (100) for coffee dispensing of the type comprising:
at least one general supply valve (102) connectable to a water network or a similar water supply source arranged in series with a feed pump (103);
at least one indirect heating boiler (105) of the water and at least one direct heating boiler (106) of the water operatively arranged between the general valve (102) and at least one solenoid valve (200) for dispensing the coffee;
a hydraulic circuit (104) developing between the general supply valve (102), the boilers (105, 106) and the solenoid valve (200) for dispensing coffee;
**characterized in that** it further comprises at least one discharge container (300) according to any one of claims 11 to 13, in fluid communication with the solenoid valve (200) through at least one exhaust duct (104a) of the hydraulic circuit (104) .

## Patentansprüche

1. Wärmetauscher (1), insbesondere mit indirektem Kontakt, vorzugsweise an der Oberfläche, für Auslassbehälter (300) von Magnetventilen (200) von Maschinen (100) zur Ausgabe von Kaffee, wobei der Wärmetauscher (1) einen Körper (2) umfasst, der so konfiguriert ist, dass er im Inneren eines Auslassbehälters (300) mindestens eines Magnetventils (200) einer Maschine (100) zur Ausgabe von Kaffee angeordnet werden kann, wobei der Körper (2) umfasst:
einen ersten Abschnitt (3), der außen einen Sammelhohlraum (4) für eine heiße Abfallflüssigkeit (F1) aufweist, das von dem Magnetventil (200) der Maschine (100) zur Ausgabe von Kaffee kommt, wobei der Sammelhohlraum (4) eine erste Oberfläche (3a) des ersten Abschnitts (3), die so angeordnet ist, dass sie mit der heißen Abfallflüssigkeit (F1) des Magnetventils (200) in Kontakt kommt, und eine zweite Oberfläche (3b) definiert, die der ersten Oberfläche (3a) gegenüberliegt;
einen zweiten Abschnitt (5), der eine primäre Oberfläche (5a), die mit der zweiten Oberfläche (3b) des ersten Abschnitts (3) in Kontakt steht, und eine sekundäre Oberfläche (5b) aufweist, die der primären Oberfläche (5a) gegenüberliegt, wobei die sekundäre Oberfläche (5b) des zweiten Abschnitts (5) des Körpers (2) so angeordnet ist, dass sie mit einem Wärmetauschflüssigkeit (F2) der Maschine (100) für die Ausgabe von Kaffee in Kontakt kommt, das eine andere Temperatur als die Temperatur der heißen Abfallflüssigkeit (F1) des Magnetventils (200) der Maschine (100) aufweist, wobei der erste und der zweite Abschnitt (3, 5) des Körpers (2) des Wärmetauschers (1) einen Wärmetausch durch Leitung zwischen der heißen Abfallflüssigkeit (F1) des Magnetventils (200) in Kontakt mit der ersten Oberfläche (3a) des ersten Abschnitts (3) des Körpers (2) und der Wärmetauschflüssigkeit (F2) der Maschine (100) zur Ausgabe von Kaffee in Kontakt mit der sekundären Oberfläche (5b) des zweiten Abschnitts (5) des Körpers (2) des Wärmetauschers (1) ermöglichen.

2. Wärmetauscher (1) nach Anspruch 1, wobei der zweite Abschnitt (5) des Körpers (2) des Wärmetauschers (1) einen Durchgangskanal (6) für die Wärmetauschflüssigkeit (F2) der Maschine (100) zur Ausgabe von Kaffee aufweist, wobei der Durchgangskanal (6) aufweist:
einen Einlassanschluss (6a) für die Wärmetauschflüssigkeit (F2), die von der Maschine (100) zur Ausgabe von Kaffee kommt und sich außerhalb des ersten Teils (3) des Körpers (2) des Wärmetauschers (1) entwickelt;
einen Auslassanschluss (6b) für die Wärmetauschflüssigkeit (F2), der zur Kaffeemaschine (100) gerichtet ist und sich außerhalb des ersten Teils (3) des Körpers (2) des Wärmetauschers (1) entwickelt, vorzugsweise im Wesentlichen parallel zum Einlassanschluss (6a);
mindestens ein Durchgangssegment (6c), das sich im Inneren des ersten Abschnitts (5) des Körpers (2) des Wärmetauschers (1) entwickelt, vorzugsweise in Übereinstimmung mit der ersten Oberfläche (3a) des letzteren, wobei das Durchgangssegment (6c) in Fluidverbindung mit dem Einlassanschluss (6a) und dem Auslassanschluss (6b) steht.

3. Wärmetauscher (1) nach Anspruch 2, wobei:
die primäre Oberfläche (5a) des zweiten Abschnitts (5) des Körpers (2) des Wärmetauschers (1) durch die äußere Oberfläche des Durchgangskanals (6) für die Wärmetauschflüssigkeit (F2) mindestens in Übereinstimmung mit dem Durchgangssegment (6c) definiert ist;
die sekundäre Oberfläche (5b) des zweiten Abschnitts (5) des Körpers (2) des Wärmetauschers (1) durch die innere Oberfläche des Durchgangskanals (6) für die Wärmetauschflüssigkeit (F2) mindestens in Übereinstimmung mit dem Durchgangssegment (6c) definiert ist;
die zweite Oberfläche (3b) des ersten Abschnitts (3) des Körpers (2) des Wärmetauschers (1) durch die Oberfläche des ersten Abschnitts (3) in direktem Kontakt mit der äußeren Oberfläche des Durchgangskanals (6) für die Wärmetauschflüssigkeit (F2) mindestens in Übereinstimmung mit dem Durchgangssegment (6c) definiert ist.

4. Wärmetauscher (1) nach Anspruch 2 oder 3, wobei sich das Durchgangssegment (6c) des Durchgangskanals (6), das den zweiten Abschnitt (5) des Körpers (2) des Wärmetauschers (1) definiert, im Inneren des ersten Abschnitts (3) des Körpers (2) des letzteren gemäß einem im Wesentlichen C-förmigen Weg entwickelt.

5. Wärmetauscher (1) nach einem der Ansprüche 2 bis 4, wobei der erste Abschnitt (3) des Körpers (2) des Wärmetauschers (1) mindestens einen zusätzlichen Wärmetauschbereich (7) aufweist, der mit einer Vielzahl von Rippen (7a) zum Wärmetausch versehen ist.

6. Wärmetauscher (1) nach Anspruch 4 oder 5, wobei der zusätzliche Wärmetauschbereich (7) auf einer dritten Oberfläche (3c) des ersten Abschnitts (3) des Körpers (2) des Wärmetauschers (1) angeordnet ist, die der gegenüberliegenden Seite in Bezug auf die erste Oberfläche (3a) gegenüberliegt und nach außen weist, wobei der zweite Abschnitt (5) des Körpers (2) des Wärmetauschers (1) und die zweite Oberfläche (3b) des ersten Abschnitts (3) desselben Körpers (2) zwischen der ersten (3a) und der dritten Oberfläche (3c) des ersten Abschnitts (3) angeordnet sind.

7. Wärmetauscher (1) nach einem der Ansprüche 2 bis 6, wobei der erste Abschnitt (3) des Körpers (2) des Wärmetauschers (1) eine im Wesentlichen abgeflachte Außen- und/oder Gesamtform aufweist.

8. Wärmetauscher (1) nach einem der Ansprüche 2 bis 7, wobei der erste Abschnitt (3) des Körpers (2) des Wärmetauschers (1) eine im Wesentlichen trapezförmige Form aufweist, die sich vorzugsweise verjüngt, wenn sie sich den Einlass- (6a) und Auslassanschlüssen (6b) des Durchgangskanals (6) nähert.

9. Wärmetauscher (1) nach einem der Ansprüche 2 bis 8, wobei sich der Einlassanschluss (6a) und der Auslassanschluss (6b) des Durchgangskanals (6) der Wärmetauschflüssigkeit (F2) der Maschine (100) zur Ausgabe von Kaffee jeweils quer, vorzugsweise senkrecht zu einer vorherrschenden Abwicklungsebene des ersten Abschnitts (3) des Körpers (2) des Wärmetauschers (1) entwickeln.

10. Wärmetauscher (1) nach einem der vorstehenden Ansprüche, wobei der erste Abschnitt (3) des Körpers (2) des Wärmetauschers (1) eine Gesamtgröße aufweist, die geringer ist als die Abmessungen eines Gehäusefachs (302) des Auslassbehälters (300) des Magnetventils (200) der Maschine (100) zur Ausgabe von Kaffee.

11. Auslassbehälter (300) für Magnetventile (200) von Maschinen (100) zur Ausgabe von Kaffee, wobei der Auslassbehälter (300) umfasst:
eine Struktur (301), die mindestens ein Gehäusefach (302) zum Sammeln einer heißen Abfallflüssigkeit (F1) definiert, die von mindestens einem Magnetventil (200) einer Maschine (100) zur Ausgabe von Kaffee kommt;
mindestens einen Einlass (303), der mit einem Magnetventil (200) einer Maschine (100) zur Ausgabe von Kaffee verbunden werden kann, um den Durchfluss der relativ heißen Abfallflüssigkeit (F1) in Richtung des Gehäusefachs (302) der Struktur (301) zu ermöglichen;
mindestens einen Auslass (306), um den Abfluss der heißen Abfallflüssigkeit (F1) zu ermöglichen, die sich im Inneren des Gehäusefachs (302) des Auslassbehälters (300) angesammelt hat;
**dadurch gekennzeichnet, dass** sie mindestens einen Wärmetauscher (1) nach einem der vorstehenden Ansprüche umfasst.

12. Auslassbehälter (300) nach Anspruch 11, wobei der Wärmetauscher (1) den Sammelhohlraum (4) für die heiße Abfallflüssigkeit (F1) aufweist, die von dem jeweiligen Magnetventil (200) der Maschine (100) zur Ausgabe von Kaffee kommt, und folglich die erste Oberfläche (3a) des ersten Abschnitts (3) des entsprechenden Körpers (2) unterhalb des Einlasses (303) für die heiße Abfallflüssigkeit (F1) angeordnet ist.

13. Auslassbehälter (300) nach Anspruch 12, wobei der Körper (2) des Wärmetauschers (1) zwischen dem Einlass (303) der heißen Abfallflüssigkeit (F1) des Magnetventils (200) der Maschine (100) zur Ausgabe von Kaffee und dem Auslaufauslass (306) angeordnet ist.

14. Maschine (100) zur Ausgabe von Kaffee, umfassend:
mindestens ein allgemeines Einlassventil (102), das an ein Wassernetz oder eine ähnliche Wasserversorgungsquelle angeschlossen werden kann und
in Reihe mit einer Förderpumpe (103) angeordnet ist; mindestens einen indirekten Heizkessel (105) für das Wasser und mindestens einen direkten Heizkessel (106) für das Wasser, die zwischen dem allgemeinen Ventil (102) und mindestens einem Magnetventil (200) für die Ausgabe des Kaffees wirksam angeordnet sind;
einen hydraulischen Kreislauf (104), der sich zwischen dem allgemeinen Einlassventil (102), den Kesseln (105, 106) und dem Magnetventil (200) für die Ausgabe von Kaffee entwickelt;
**dadurch gekennzeichnet, dass** sie ferner mindestens einen Auslassbehälter (300) nach einem der Ansprüche 11 bis 13 umfasst, der über mindestens eine Ablassleitung (104a) des hydraulischen Kreislaufs (104) in Fluidverbindung mit dem Magnetventil (200) steht.

## Revendications

1. Échangeur de chaleur (1), en particulier à contact indirect, de préférence sur la surface, pour des récipients d'évacuation (300) d'électrovannes (200) de machines (100) pour la distribution de café, l'échangeur de chaleur (1) comprenant un corps (2) configuré pour être placé à l'intérieur d'un récipient d'évacuation (300) d'au moins une électrovanne (200) d'une machine (100) pour la distribution de café, le corps (2) comprenant :
une première partie (3) présentant extérieurement une cavité de collecte (4) d'un fluide de rejet chaud (F1) provenant de l'électrovanne (200) de la machine (100) pour la distribution de café, la cavité de collecte (4) définissant une première surface (3a) de la première partie (3), agencée pour venir en contact avec le fluide de rejet chaud (F1) de l'électrovanne (200) et une deuxième surface (3b) faisant face au côté opposé à la première surface (3a) ;
une seconde partie (5) présentant une surface primaire (5a) en contact avec la deuxième surface (3b) de la première partie (3) et une surface secondaire (5b) opposée à la surface primaire (5a), la surface secondaire (5b) de la seconde partie (5) du corps (2) étant agencée pour venir en contact avec un fluide d'échange de chaleur (F2) de la machine (100) pour la distribution de café ayant une température différente de la température du fluide de rejet chaud (F1) de l'électrovanne (200) de la machine (100), les première et seconde parties (3, 5) du corps (2) de l'échangeur de chaleur (1) permettant un échange de chaleur, par conduction, entre le fluide de rejet chaud (F1) de l'électrovanne (200) en contact avec la première surface (3a) de la première partie (3) du corps (2) et le fluide d'échange de chaleur (F2) de la machine (100) pour la distribution de café en contact avec la surface secondaire (5b) de la seconde partie (5) du corps (2) de l'échangeur de chaleur (1).

2. Échangeur de chaleur (1) selon la revendication 1, dans lequel la seconde partie (5) du corps (2) de l'échangeur de chaleur (1) comprend un conduit de transit (6) du fluide d'échange de chaleur (F2) de la machine (100) pour la distribution de café, le conduit de transit (6) présentant :
un raccord d'alimentation (6a) du fluide d'échange de chaleur (F2) provenant de la machine (100) pour la distribution de café qui se développe à l'extérieur de la première partie (3) du corps (2) de l'échangeur de chaleur (1) ;
un raccord de sortie (6b) du fluide d'échange de chaleur (F2) dirigé vers la machine (100) pour la distribution de café qui se développe à l'extérieur de la première partie (3) du corps (2) de l'échangeur de chaleur (1), de préférence sensiblement parallèlement au raccord d'alimentation (6a) ;
au moins un segment de transit (6c) se développant à l'intérieur de la première partie (5) du corps (2) de l'échangeur de chaleur (1), de préférence en correspondance de la première surface (3a) de ce dernier, le segment de transit (6c) étant en communication fluidique avec le raccord d'alimentation (6a) et le raccord de sortie (6b).

3. Échangeur de chaleur (1) selon la revendication 2, dans lequel :
la surface primaire (5a) de la seconde partie (5) du corps (2) de l'échangeur de chaleur (1) est définie par la surface externe du conduit de transit (6) du fluide d'échange de chaleur (F2) au moins en correspondance du segment de transit (6c) ;
la surface secondaire (5b) de la seconde partie (5) du corps (2) de l'échangeur de chaleur (1) est définie par la surface interne du conduit de transit (6) du fluide d'échange de chaleur (F2) au moins en correspondance du segment de transit (6c) ;
la deuxième surface (3b) de la première partie (3) du corps (2) de l'échangeur de chaleur (1) est définie par la surface de la première partie (3) en contact direct avec la surface externe du conduit de transit (6) du fluide d'échange de chaleur (F2) au moins en correspondance du segment de transit (6c).

4. Échangeur de chaleur (1) selon la revendication 2 ou 3, dans lequel le segment de transit (6c) du conduit de transit (6) définissant la seconde partie (5) du corps (2) de l'échangeur de chaleur (1) se développe à l'intérieur de la première partie (3) du corps (2) de ce dernier selon un parcours sensiblement en forme de C.

5. Échangeur de chaleur (1) selon l'une quelconque des revendications 2 à 4, dans lequel la première partie (3) du corps (2) de l'échangeur de chaleur (1) présente au moins une zone d'échange de chaleur auxiliaire (7) munie d'une pluralité d'ailettes (7a) pour un échange de chaleur.

6. Échangeur de chaleur (1) selon la revendication 4 ou 5, dans lequel la zone d'échange auxiliaire (7) est agencée sur une troisième surface (3c) de la première partie (3) du corps (2) de l'échangeur de chaleur (1) faisant face au côté opposé à la première surface (3a) et vers l'extérieur, la seconde partie (5) du corps (2) de l'échangeur de chaleur (1) et la deuxième surface (3b) de la première partie (3) du même corps (2) étant interposées entre la première (3a) et la troisième surface (3c) de la première partie (3).

7. Échangeur de chaleur (1) selon l'une quelconque des revendications 2 à 6, dans lequel la première partie (3) du corps (2) de l'échangeur de chaleur (1) présente une conformation externe et/ou globale sensiblement aplatie.

8. Échangeur de chaleur (1) selon l'une quelconque des revendications 2 à 7, dans lequel la première partie (3) du corps (2) de l'échangeur de chaleur (1) présente une forme sensiblement trapézoïdale, de préférence se rétrécissant à mesure qu'elle approche des raccords d'alimentation (6a) et de sortie (6b) du conduit de transit (6).

9. Échangeur de chaleur (1) selon l'une quelconque des revendications 2 à 8, dans lequel le raccord d'alimentation (6a) et le raccord de sortie (6b) du conduit de transit (6) du fluide d'échange de chaleur (F2) de la machine (100) pour la distribution de café se développent chacun transversalement, de préférence perpendiculairement à un plan de développement dominant de la première partie (3) du corps (2) de l'échangeur de chaleur (1).

10. Échangeur de chaleur (1) selon l'une quelconque des revendications précédentes, dans lequel la première partie (3) du corps (2) de l'échangeur de chaleur (1) présente une taille globale inférieure aux dimensions d'un compartiment de logement (302) du récipient d'évacuation (300) de l'électrovanne (200) de la machine (100) pour la distribution de café.

11. Récipient d'évacuation (300) pour électrovannes (200) de machines (100) pour la distribution de café, le récipient d'évacuation (300) comprenant :
une structure (301) définissant au moins un compartiment de logement (302) pour la collecte d'un fluide de rejet chaud (F1) provenant d'au moins une électrovanne (200) d'une machine (100) pour la distribution de café ;
au moins une entrée (303) apte à être reliée à une électrovanne (200) d'une machine (100) pour la distribution de café pour permettre le passage du fluide de rejet chaud (F1) associé vers le compartiment de logement (302) de la structure (301) ;
au moins une sortie (306) pour permettre le refoulement du fluide de rejet chaud (F1) accumulé à l'intérieur du compartiment de logement (302) du récipient d'évacuation (300) ;
**caractérisé en ce qu'**il comprend au moins un échangeur de chaleur (1) selon l'une quelconque des revendications précédentes.

12. Récipient d'évacuation (300) selon la revendication 11, dans lequel l'échangeur de chaleur (1) possède la cavité de collecte (4) du fluide de rejet chaud (F1) provenant de l'électrovanne (200) respective de la machine (100) pour la distribution de café et, par conséquent, la première surface (3a) de la première partie (3) du corps (2) associé agencée au-dessous de l'entrée (303) du fluide de rejet chaud (F1) .

13. Récipient d'évacuation (300) selon la revendication 12, dans lequel le corps (2) de l'échangeur de chaleur (1) est interposé entre l'entrée (303) du fluide de rejet chaud (F1) de l'électrovanne (200) de la machine (100) pour la distribution de café et la sortie de refoulement (306).

14. Machine (100) pour la distribution de café du type comprenant :
au moins une vanne d'alimentation générale (102), apte à être reliée à un réseau d'eau ou à une source d'alimentation en eau similaire, agencée en série avec une pompe d'apport (103) ;
au moins une chaudière à chauffage indirect (105) de l'eau et au moins une chaudière à chauffage direct (106) de l'eau agencées de manière fonctionnelle entre la vanne générale (102) et au moins une électrovanne (200) pour la distribution du café ;
un circuit hydraulique (104) se développant entre la vanne d'alimentation générale (102), les chaudières (105, 106) et l'électrovanne (200) pour la distribution de café ;
**caractérisée en ce qu'**elle comprend en outre au moins un récipient d'évacuation (300) selon l'une quelconque des revendications 11 à 13, en communication fluidique avec l'électrovanne (200) par le biais d'au moins un conduit d'échappement (104a) du circuit hydraulique (104).
